# DEMANDE DE BREVET EUROPEEN

(11) **EP 3 118 471 A1**
(43) Date de publication de la demande: **18.01.2017**
(21) Numéro de dépôt: 16186879.9
(22) Date de dépôt: 02.05.2014
(51) Int. Cl.: F16B 39/30

(54) **SYSTÈME D'ASSEMBLAGE FILETÉ AUTOBLOQUANT**

(30) Priorité: 14.05.2013 CH 9512013
(62) Demande divisionnaire de: 14166935.8
(71) Demandeur: Safelock SA, 2735 Malleray (CH)
(72) Inventeur: Kaufmann, Beat, 2735 Malleray (CH)
(74) Mandataire: P&TS SA (AG, Ltd.)

(57) **Abrégé**

Système d'assemblage autobloquant comprenant une vis 2 présentant un premier filet 3, dont le diamètre nominal est inférieur à 1.5 mm, et un élément taraudé 4 présentant un deuxième filet 5 dont le diamètre nominal est inférieur à 1.5 mm et dont la surface de contact lors de l'assemblage entre ladite tige 2 filetée et ledit élément taraudé 4 consiste en une arête hélicoïdale 6.

## Description

### Domaine technique

La présente invention concerne un système d'assemblage autobloquant du type vis/écrou pour vis de précision.

### Etat de la technique

La présente invention concerne un système d'assemblage de deux éléments, notamment l'assemblage d'un élément fileté avec un élément taraudé tel qu'un ensemble vis/écrou usuel. L'opération d'assemblage consiste à appliquer un couple de serrage sur la tête d'une tige filetée, ou vis, afin de la faire progresser dans un écrou au moyen d'un outil.

Lors de cette opération de serrage d'un ensemble vis/écrou conventionnel, l'effort de traction, ou de pression, n'est exercé que sur une portion du filet de la vis. La plus grande partie de l'effort de pression est en fait supportée par les deux premières spires du filet, les suivantes n'étant pratiquement pas ou peu sollicitées. Ce phénomène est dû au système normalisé du jeu de tolérances, qui prévoit suffisamment d'espace entre les flancs, afin de garantir l'assemblage des filets intérieurs et extérieurs. Ceci implique qu'après un certain nombre d'opérations de desserrage et de resserrage, les forces de serrage provoquent une déformation ponctuelle du filet. Lors d'un choc ou de vibrations répétées, l'assemblage n'est plus garanti et la vis ou la tige filetée risque de se dévisser.

En horlogerie, on emploie fréquemment des mouvements de montre qui comportent plusieurs vis dont le diamètre de la tige filetée est inférieur au millimètre. Ce type de vis peut également être utilisé dans l'habillage d'une montre ou d'autres parties telles que le bracelet, le fermoir, etc.

On souhaite par ailleurs en horlogerie, et dans d'autres domaines, assurer un maintien ferme avec des vis aussi courtes que possibles; le volume à disposition ne permet pas d'employer des vis plus longues. Il est cependant difficile de garantir un couple de maintien suffisant avec des vis très courtes et de très petit module. Par conséquent, les vis horlogères, très courtes, de petit diamètre, et difficiles à usiner avec précision, ont tendance à se dévisser facilement. Le problème est encore exacerbé lorsque les vis subissent des contraintes telles que chocs ou vibrations, qui sont fréquents lors du porter de la montre. Dans ce cas, le maintien de l'assemblage vis-écrou devient difficile, et une opération supplémentaire de collage est alors afin d'éviter le dévissage des vis.

Cependant l'ajout de colle dans un mouvement présente des inconvénients majeurs. Premièrement, cette opération est très délicate et nécessite d'être effectuée par un opérateur expérimenté. Ceci engendre un coût et une perte de temps non négligeable dans le montage du mouvement.

D'autre part, lors de cette opération de collage, il arrive que des gouttes de colle coulent par inadvertance sur d'autres parties du mouvement. Les conséquences d'un tel incident peuvent être dommageables puisque le mouvement peut être rendu inutilisable.

En outre, si une opération de dévissage s'avère nécessaire, la colle appliquée sur la vis doit être ôtée avant de pouvoir dévisser la vis et l'application de colle doit être répétée lors du remontage.

Des systèmes de vissage autobloquant sont connus dans l'art antérieur, mais le profil des filets requis nécessite une précision d'usinage très difficile à obtenir dans des petits modules. Par conséquent, ces systèmes d'assemblage autobloquants existent uniquement dans des grands modules, par exemple des modules égaux ou supérieurs à 1.5 mm. En revanche, les systèmes autobloquants connus ne permettent pas de garantir un assemblage de précision avec la qualité requise dans le domaine de l'horlogerie, notamment par les normes de l'horlogerie suisse (NIHS) et les normes internes aux horlogers.

Il est particulièrement difficile de réaliser un système auto-bloquant avec des vis courtes, car la surface de contact entre la tige filetée et la pièce taraudée est trop courte.

Actuellement, on ne connait donc pas de système d'assemblage vis/écrou autobloquant pour une vis de petit diamètre et en particulier de module inférieur à 1.5 mm. Un besoin existe cependant pour des vis autobloquantes de module inférieur à 1.5 mm, en particulier avec des modules compris entre 0.3 et 1.4 mm.

Pour un diamètre de filet inférieur à 1.5 mm, les exigences au niveau des tolérances liées au filetage intérieur et extérieur sont telles que les moyens de production classiques ne permettent pas une réalisation industrielle de cet assemblage autobloquant.

D'autre part, les vis de petit module sont fragiles, en raison du diamètre réduit de leur tige. Elles risquent donc de se déformer ou même de casser, notamment lorsqu'un couple de serrage important est nécessaire pour assurer leur blocage. Il est par exemple fréquent que les vis de petit module cassent juste sous la tête de vis lorsqu'elles sont trop serrées.

### Bref résumé de l'invention

Un but de la présente invention est de proposer un système d'assemblage de type vis/écrou mieux adapté aux besoins particuliers de l'horlogerie et d'autres domaines de la micromécanique.

Un autre but est de proposer un système d'assemblage autobloquant qui ne nécessite pas de colle.

Un autre but de l'invention est de proposer un assemblage vis/écrou autobloquant qui permette d'assurer un maintien sûr et fiable même avec des vis de faible longueur.

Un autre but de l'invention est de proposer un assemblage vis/écrou autobloquant dans lequel la solidité de la vis est renforcée, notamment dans le cas de vis de petit module.

Il serait imaginable de réaliser un système d'assemblage autobloquant basé sur une vis de profil standard et un élément taraudé avec un filet de forme particulière. Cependant, la qualité de l'assemblage dépendrait alors également de la précision avec laquelle la vis est usinée. Le risque serait alors qu'une vis de moindre qualité soit employée avec un élément taraudé modifié, résultant en un assemblage de moindre qualité.

Un but de la présente invention est donc d'empêcher le risque lié à une mauvaise manipulation et à l'emploi de vis de moindre qualité dans l'assemblage revendiqué.

Selon l'invention, ces buts sont atteints notamment au moyen d'un système d'assemblage autobloquant tel que décrit dans la revendication 1.

Un système d'assemblage autobloquant selon l'invention comprend une vis présentant un premier filet avec un flanc avant et un flanc arrière, lesdits flancs étant asymétriques, le diamètre nominal de la tige étant inférieur à 1.5 mm, et un élément taraudé présentant un deuxième filet et dont le diamètre nominal est inférieur à 1.5 mm. Lors de l'assemblage, la surface de contact entre la vis et ledit élément taraudé consiste en une arête hélicoïdale.

La surface de contact est ainsi réduite à une simple arête. La surface de cette arête est très faible, proche de nulle, en sorte que la pression exercée sur cette surface par la force de traction de la vis est importante ce qui contribue à assurer un maintien fiable.

Il est en outre plus simple de garantir une précision d'usinage optimale sur une simple arête que sur une surface plus importante.

Le contact entre la vis et l'élément taraudé se produit de préférence sur toute la longueur d'arête de la portion de vis engagée dans l'élément taraudé. Ainsi, un contact fiable et une pression importante sont obtenus dès les premiers tours de vis dans l'élément taraudé, et pas seulement sur les dernières spires du filet.

Cette solution présente donc l'avantage par rapport à l'art antérieur d'établir un contact continu entre les filets de l'élément taraudé et de la tige filetée le long d'une arête. En particulier, ce contact continu permet de répartir les efforts de traction sur la longueur totale du filet des parties filetées en contact et donc de réduire la fatigue du système vis/écrou.

L'assemblage comporte ainsi une vis non standard. La fiabilité de l'assemblage dépend notamment de cette vis, et de son profil particulier et asymétrique. Une vis conventionnelle, par exemple une vis conforme au standard NIHS, ne peut de préférence pas être vissée dans cet assemblage. On évite ainsi le risque de dévissage accidentel qui pourrait se produire si une vis conventionnelle, y compris de vis de mauvaises qualités, pouvait par erreur être employée à la part de la vis requise.

La vis employée dans l'assemblage de l'invention comporte donc un filet avec une section longitudinale dont le pas présente un profil asymétrique.

Par « section longitudinale » de l'élément taraudé ou de la vis, on entend la coupe de l'élément taraudé ou de la vis, en particulier la coupe de la partie filetée de l'élément taraudé ou de la vis, selon un plan qui inclut leur axe longitudinal.

Par « pas », on entend un segment entre deux portions homologues de la structure régulière que constitue le filet de la vis ou celui de l'élément taraudé.

Par « profil », on entend la forme du motif compris dans un pas du filet de la tige filetée ou celui de l'élément taraudé.

Le système d'assemblage selon l'invention présente une tige filetée, par exemple une vis, dont la section longitudinale du filet présente un profil de pas asymétrique. Ce profil est composé d'un flanc avant, ou flanc d'attaque, formant un angle compris entre -40 et -80 degrés, de préférence entre -50 degrés et -70 degrés par rapport à l'axe longitudinal de la vis, et d'un deuxième flanc, asymétrique audit premier flanc et formant un angle compris entre 10 et 50 degrés, de préférence entre 20 degrés et 40 degrés, par rapport à l'axe longitudinal de la vis. De préférence l'angle du flanc avant est compris entre -64 et -56 degrés.

L'élément taraudé comporte un deuxième filet avec une section longitudinale qui présente quant à elle un profil de pas de préférence symétrique. Un profil de pas du filet de l'élément taraudé est cependant aussi envisageable. Le profil du deuxième filet comporte un flanc avant et un flanc arrière destiné à venir en contact avec le flanc arrière de la vis. Le flanc arrière forme un angle avec l'axe horizontal de la vis de préférence inférieur à -40 degrés, par exemple compris entre -40 et -80 degrés, de préférence entre -50 et -70 degrés. Le flanc avant forme un angle avec l'axe horizontal de la vis de préférence supérieur à 40 degrés, par exemple compris entre 40 et 80 degrés, de préférence entre 50 et 70 degrés. Les flancs avant et arrière de l'élément taraudé peuvent être symétriques.

Une portion tronquée, de longueur inférieure ou égale à 15 µm, joint le flanc avant et le flanc arrière du filet de l'élément taraudé. Le profil de ce filet présente une arête entre cette portion tronquée et le flanc avant; cette arête de forme hélicoïdale est destinée à devenir la seule ligne de contact avec la portion de vis engagée dans l'élément taraudé, plus précisément avec une portion du flanc arrière du filet de cette vis

Cet assemblage présente l'avantage de rester autobloquant même si la vis ou l'élément taraudé n'a pas un profil idéal ; en effet, un usinage non idéal provoque tout au plus un léger déplacement du point de contact entre l'arête de l'élément taraudé et le flanc arrière du filet de la vis, sans effet sur la sûreté de l'assemblage. L'usinage de vis et d'éléments taraudés de petits modules est donc facilité, puisque les exigences de précision peuvent être réduites sans nuire à la sécurité de l'assemblage.

Dans un système d'assemblage selon l'invention, lors de l'assemblage de ladite tige filetée et dudit élément taraudé, le flanc arrière du filet de l'élément taraudé est presque parallèle au flanc avant du filet de la vis. Dans un mode de réalisation, ces deux flancs ne sont pas tout à fait parallèles entre eux mais présentent un écart angulaire inférieure à 10 degrés, de préférence inférieur à 5 degrés; on dispose ainsi de davantage de liberté pour tarauder un filetage non conventionnel dans la partie taraudée externe, et pour éviter ainsi la possibilité d'introduire une vis conventionnelle dans cet assemblage.

Lors de l'assemblage de la tige filetée et de l'élément taraudé d'un système d'assemblage autobloquant selon l'invention, il existe un jeu entre les flancs des filets de la vis et de l'élément taraudé. Ce jeu permet notamment un vissage rapide et sans effort jusqu'au blocage de la tige filetée dans l'élément taraudé.

Le jeu présent entre le flanc arrière du filet de l'élément taraudé et le flanc avant du filet de la vis est de préférence inférieur à 50 µm, de préférence inférieure à 30 microns, afin de permettre un vissage facile à vide, avant que la vis ne se bloque mais sans augmenter le pas plus que nécessaire

La vis et l'élément taraudé de l'assemblage selon l'invention se caractérisent en outre par un pas de filetage réduit. Dans un mode de réalisation, pour un module donné, le pas de filetage est réduit d'au moins 15% par rapport au pas standard d'une vis conforme au standard NIHS. Ce pas réduit offre deux avantages. D'une part, il permet d'augmenter la longueur du filet autour d'une vis de longueur donnée, et donc d'augmenter le couple qu'il est nécessaire d'exercer pour dévisser cette vis. D'autre part, ce pas réduit permet de diminuer la profondeur de l'interstice entre chaque spire du filet de la vis, et donc d'augmenter le diamètre de la vis au niveau du fond de filet, la rendant ainsi plus solide.

La géométrie particulière de la section longitudinale de la vis et de l'élément taraudé, notamment l'asymétrie du filet de la vis et le choix des angles des différents flancs, présente l'avantage d'assurer un contact continu le long du filet de la vis. Les dimensions de la section du filet, par exemple la longueur de la portion tronquée du filet de l'élément taraudé, sont de l'ordre de quelques micromètres. Il peut arriver par exemple que cette portion tronquée soit légèrement abîmée ou que sa largeur soit différente sur une certaine zone. Dans ce cas, le flanc de l'élément taraudé est orienté de manière à ce qu'il y ait toujours un point de contact tout au long du filet de la vis. Ainsi l'arête hélicoïdale constituant la surface de contact entre le filet de la vis et celui de l'élément taraudé reste continue malgré les défauts que peut présenter le filet de l'élément taraudé.

Le système d'assemblage autobloquant selon l'invention comporte une tige filetée, par exemple une vis, et un élément taraudé dont les diamètres nominaux respectifs sont compris entre 0.3 et 1.4 mm.

D'autre part, le système autobloquant permet d'effectuer plusieurs opérations de desserrage et de resserrage de la vis sans pour autant altérer le verrouillage de l'assemblage, également nommé frein filet mécanique.

Dans un assemblage vis/écrou selon l'invention, le profil du filet de l'élément taraudé obtenu par un procédé de fabrication, par exemple de fraisage, permet de réduire le niveau de précision de fabrication requis. En effet lors de l'assemblage d'une tige filetée standard et de l'élément taraudé selon le profil décrit précédemment, le contact entre la tige et l'écrou est maintenu même si le degré de précision de fabrication de la tige filetée ou de l'élément taraudé n'est pas optimal. L'assemblage tige filetée/élément taraudé selon l'invention répond ainsi aux exigences requises par le domaine de l'horlogerie concernant la tenue et le serrage des vis.

Un procédé pour assembler un système d'assemblage autobloquant selon l'invention met en oeuvre une opération de vissage impliquant un effort de traction. Cet effort de traction provoque l'auto-centrage de la vis par la mise en contact de l'arête de la vis avec les flancs du filet de l'élément taraudé et engendre un contact tangentiel et continu sur toute la longueur du filet de la vis jusqu'à son blocage. Ceci permet notamment de répartir l'effort de traction le long du filet de la vis.

### Brève description des figures

Des exemples de mise en oeuvre de l'invention sont indiqués dans la description illustrée par les figures annexées dans lesquelles :
La figure 1 illustre une vue en coupe de l'assemblage selon l'invention.
La figure 2A illustre une section longitudinale d'un assemblage autobloquant selon l'invention.
La figure 2B illustre un détail des filets de l'assemblage de la figure 2A, la vis étant en position serrée.

### Exemple(s) de mode de réalisation de l'invention

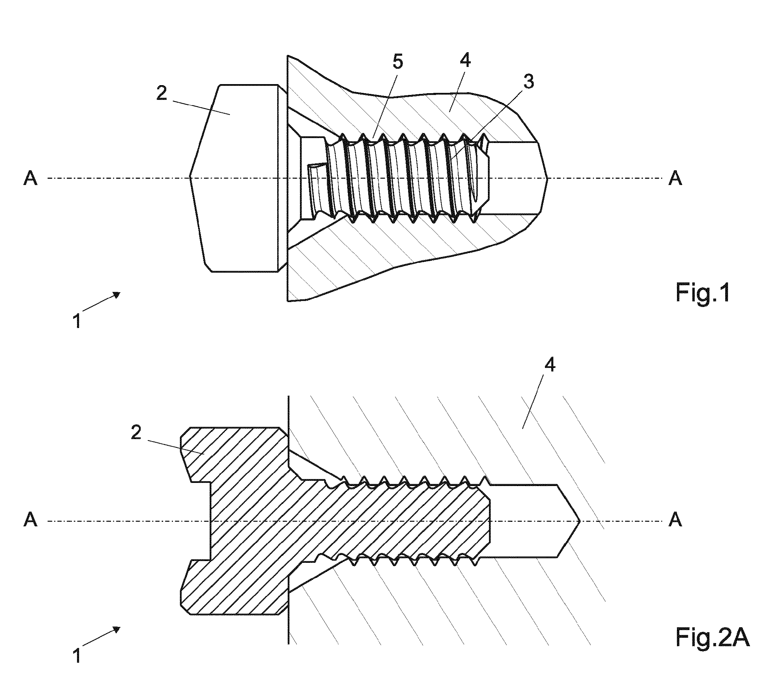

La figure 1 illustre l'assemblage autobloquant de type vis-écrou 1 selon l'invention. L'axe longitudinal A-A est commun à la vis, ou tige filetée, 2 et à l'élément taraudé 4.

La figure 2A illustre une section longitudinale dans un plan comprenant l'axe A-A d'un assemblage autobloquant selon l'invention.

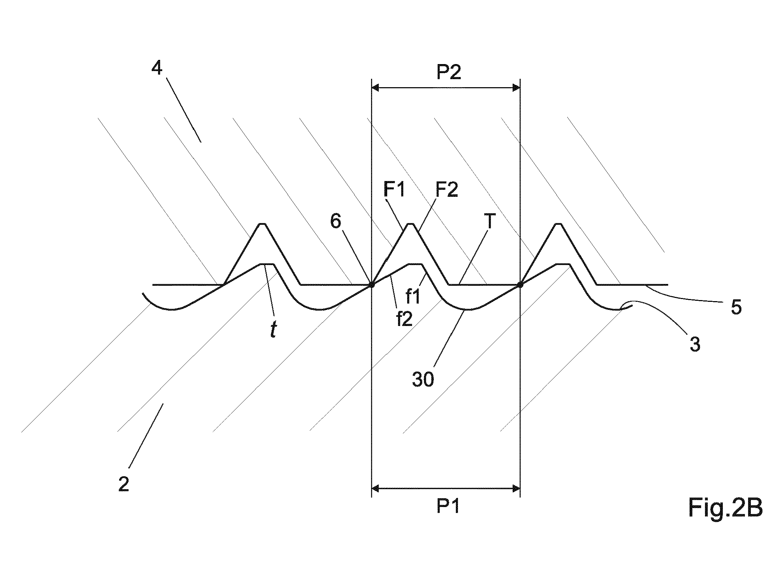

La figure 2B illustre un détail agrandi de la figure 2A.

Dans cette première variante, un élément taraudé 4 présente un filet 5, appelé plus loin le « deuxième filet » pour le distinguer du premier filet 3 de la vis. Ce deuxième filet 5 comporte une section longitudinale selon l'axe longitudinal A-A avec un profil de pas asymétrique. Chaque pas P2 du filet 5 comporte un flanc avant F1 formant un angle entre 40 et 80 degrés, de préférence entre 50 et 70 degrés, par exemple de 56 degrés par rapport à l'axe longitudinal de l'élément taraudé 4. Chaque pas P2 du filet 5 comporte en outre un flanc arrière F2, de préférence symétrique par rapport au premier flanc F1 et formant un angle entre -40 et -80 degrés, de préférence entre -50 et s70 degrés, par exemple de -56 degrés par rapport à l'axe longitudinal A-A. Une portion tronquée T sensiblement parallèle à l'axe longitudinal A-A joint les deux flancs F1, F2. Une arête 6 est constituée à la jonction entre le flanc avant F1 et la portion tronquée T, ou à la jonction entre le flanc avant F1 et le flanc arrière F2 si aucune portion tronquée n'est prévue. L'arête 6 représente la surface de contact entre la portion tronquée T de l'élément taraudé et le flanc arrière f2 de la vis 2.

La vis 2 présente un premier filet 3 dont le profil du pas p1 de la section longitudinale est asymétrique. Le premier filet 3 comporte un flanc avant f1 formant un angle entre 40 et 80 degrés, de préférence entre 50 et 70 degrés, par exemple de 60 degrés par rapport à l'axe longitudinal A-A de la tige filetée 2. Le premier filet 3 comporte en outre un flanc arrière f2, asymétrique par rapport au flanc avant f1 et formant un angle entre 10 et 50 degrés, de préférence entre 20 à 40 degrés par rapport à l'axe longitudinal de la vis 2. Une portion tronquée t peut être prévue pour joindre le flanc avant f1 et le flanc arrière f2.

Le pas P2 de l'élément taraudé correspond au pas P1 de la vis; il est choisi pour être compris entre 0.06 mm et 0.25 mm selon le module de la vis.

Avantageusement, le pas P2 de l'élément taraudé, et le pas P1 correspondant de la vis, est plus petit que le pas d'une vis standard conforme à la norme NIHS de module correspondant. Pour une longueur de vis donnée, la longueur du filet résultante est donc plus longue. Il en résulte une surface de contact augmentée et un meilleur maintien de la vis dans l'élément taraudé. Cette caractéristique permet en outre d'empêcher le vissage accidentel d'une vis standard dans un élément taraudé selon l'invention, qui résulterait en un assemblage non fiable.

**La table 1 ci-dessous permet de comparer le pas P1, P2 de la vis et de l'élément taraudé de l'invention par rapport au pas standard selon la norme NIHS, pour différents modules :**

| **Module** | **Pas d'une vis conventionnelle selon standard NIHS** | **Pas P1, P2 d'une vis selon l'invention** |
|---|---|---|
| 0.3 | 0.08 | 0.06 |
| 0.35 | 0.09 | 0.06 |
| 0.4 | 0.1 | 0.08 |
| 0.5 | 0.125 | 0.1 |
| 0.6 | 0.15 | 0.125 |
| 0.7 | 0.175 | 0.15 |
| 0.8 | 0.2 | 0.15 |
| 0.9 | 0.225 | 0.175 |
| 1 | 0.25 | 0.2 |
| 1.2 | 0.25 | 0.2 |
| 1.4 | 0.3 | 0.25 |

On constate que par rapport au pas d'une vis conventionnelle selon le standard NIHS, le pas d'une vis selon l'invention est réduit de 25% pour les petits modules et de 16.66% pour les vis de module 1.4.

La dimension de la portion tronquée T de l'élément taraudé 4 peut être comprise entre 5 et 20 µm.

Le contact entre les filets de la vis 2 et de l'écrou 4 consiste en une arête hélicoïdale 6 tout le long des filets 3 et 5 de l'assemblage.

Comme on le voit sur la figure 2, le flanc avant f1 du filet 3 de la vis est parallèle, ou quasi parallèle, au flanc arrière du filet 5 de l'élément taraudé 4, c'est-à-dire qu'ils forment un angle inférieur à 10 degrés, de préférence inférieur à 5 degrés, et présentent entre eux un jeu inférieur à 40 microns, de préférence inférieure à 20 microns, de manière à permettre un vissage à vide sans effort.

Le fond du filet 30 de la vis, à la jonction interne entre les flancs f1 et f2, est moins profond que pour une vis conventionnelle selon le standard NIHS, ce qui permet de rendre la vis plus solide. Cette augmentation du diamètre au niveau du fond de filet résulte d'une part de la réduction du pas P1, et d'autre part d'un effort supplémentaire pour rehausser ce fond de filet en laissant un espace réduit entre ce fond de filet et le sommet du filet 5 de l'élément taraudé 4.

Le fond du filet 3 peut être arrondi ; pour un diamètre nominal donné de vis, il en résulte un diamètre minimal de la vis au niveau du fond de filet qui est plus important que pour une vis conventionnelle selon le standard NIHS, et donc une solidité accrue. L'usinage d'un fond arrondi est cependant complexe, et un fond plat, sous forme d'une portion tronquée par exemple parallèle à l'axe longitudinal A-A, peut aussi être mis en oeuvre.

Le fond du deuxième filet 5 peut aussi être constitué par une portion tronquée parallèle à l'axe longitudinal A-A et relevée par rapport au fond de filet d'un élément taraudé conventionnel selon le standard NIHS. De cette manière, la hauteur du filet 5 de cet élément 4 est moins élevée et que l'élément taraudé est également renforcé.

La portion tronquée T de l'élément taraudé 4 permet de garder un volume creux suffisant entre l'élément taraudé 4 et le fond de filet de la vis 2 ; ce volume permet de compenser d'éventuelles déformations du filet de la tige filetée 2. La portion tronquée T offre ainsi un volume entre l'écrou et la vis dans lequel la matière peut se déformer lors du serrage de la vis, de manière à éviter un blocage de la vis en un seul point de l'assemblage.

Le flanc avant F1 de l'élément taraudé est non parallèle au flanc arrière f2 de la vis 2. L'angle entre ces deux flancs f2 et F1 est de préférence supérieur à 10 degrés, de préférence entre 20 et 40 degrés, par exemple de trente degrés. Si les flancs F1 et f2 étaient parallèles, le contact entre les filets 3 et 5 ne serait pas assuré au cas où le filet de la vis ou de l'écrou venait à présenter le moindre défaut. Le profil du filet et notamment l'orientation des flancs f2, F1 garantissent l'existence d'un contact selon une ligne qui suit le filet et constitue une arête hélicoïdale 6 tout au long de l'assemblage vis/écrou.

### Numéros de référence employés sur les figures

- 1: Système d'assemblage autobloquant
- 2: Tige filetée, par exemple vis
- 3: Premier filet de la tige filetée 2
- 4: Elément taraudé
- 5: Deuxième filet de l'élément taraudé 4
- 6: Point de contact entre les filets 3 et 5
- f1: Flanc avant du filet 3
- f2: Flanc arrière du filet 3
- t: Portion tronquée du filet 3
- F1: Flanc avant du filet 5
- F2: Flanc arrière du filet 5
- T: Portion tronquée du filet 5
- 30: Fond du filet 3

## Revendications

1. Système d'assemblage autobloquant (1) comprenant :
une vis (2) présentant un premier filet (3) avec un flanc avant (f1) et un flanc arrière (f2), lesdits flancs étant asymétriques, le diamètre nominal de la vis étant inférieur à 1.5 mm, et
un élément taraudé (4) présentant un deuxième filet (5) et dont le diamètre nominal est inférieur à 1.5 mm,
**caractérisé en ce que**, lors de l'assemblage, la surface de contact entre ladite vis (2) et ledit élément taraudé (4) consiste en une arête hélicoïdale (6).

2. Système d'assemblage selon la revendication 1, **caractérisé en ce que** ledit flanc arrière (f2) de la vis (2) forme avec l'axe longitudinal de ladite vis (2) un angle compris entre 20 degrés et 40 degrés, et **en ce que** ledit élément taraudé (4) présente un deuxième filet (5) comportant un flanc avant (F1) qui forme avec l'axe longitudinal de ladite vis (2) un angle compris entre 50 degrés et 70 degrés.

3. Système d'assemblage selon l'une des revendications 1 ou 2, **caractérisé en ce que** ledit deuxième filet (5) présente un flanc avant (F1) et un flanc arrière (F2) symétriques.

4. Système d'assemblage selon l'une des l'une des revendications 1 ou 2, **caractérisé en ce que** ledit deuxième filet (5) présente un flanc avant (F1), un flanc arrière (F2) et une portion tronquée (T) joignant le flanc avant (F1) du deuxième filet et le flanc arrière (F2) du deuxième filet.

5. Système d'assemblage selon la revendication 4, **caractérisé en ce que** ledit flanc avant (F1) du deuxième filet est symétrique par rapport audit flanc arrière (F2) du deuxième filet (5).

6. Système d'assemblage selon la revendication 2, **caractérisé en ce que** la longueur de ladite portion tronquée (T) dudit deuxième filet (5) de l'élément taraudé (4) est inférieure ou égale à 15 µm.

7. Système d'assemblage selon l'une des revendications 3 à 6, **caractérisé en ce que** ledit flanc arrière (F2) de l'élément taraudé (4) forme avec l'axe longitudinal de ladite vis (2) un angle compris entre -50 degrés et -70 degrés, et **en ce que** ledit flanc avant (f1) de la vis (2) forme avec l'axe longitudinal de ladite vis (2) un angle compris entre -50 degrés et -70 degrés.

8. Système d'assemblage selon l'une des revendications 4 à 6, ladite arête étant située à la jonction entre ladite portion tronquée (T) et ledit flanc avant (F1) du deuxième filet (5).

9. Système d'assemblage selon l'une des revendications 1 à 8, **caractérisé en ce que** le diamètre nominal dudit premier filet (3) de ladite vis (2) est compris entre 0.3 et 1.4 mm.

10. Système d'assemblage selon l'une des revendications 1 à 9, **caractérisé en ce que** le diamètre nominal dudit deuxième filet (5) dudit élément taraudé (4) est compris entre 0.3 et 1.4 mm.

11. Système d'assemblage selon l'une des revendications 1 à 10, dans lequel le pas (P1) de ladite vis (2) est réduit d'au moins 15% par rapport au pas d'une vis de même module conforme à la norme NIHS.

12. Vis (2) dont le diamètre nominal est inférieur à 1.5 mm et comprenant un filet (3) **caractérisé en ce que** ledit filet (3) comporte un premier flanc (f1) formant un angle compris entre -50 degrés et -70 degrés par rapport à l'axe longitudinal de la vis et un deuxième flanc (f2), asymétrique par rapport au premier flanc (f1) et formant un angle compris entre 20 degrés et 40 degrés par rapport à l'axe longitudinal de la vis.

13. Vis selon la revendication 12, dans laquelle le pas (P1) est réduit d'au moins 15% par rapport au pas d'une vis de même module conforme à la norme NIHS.
